# EUROPÄISCHE PATENTSCHRIFT

(11) **EP 1 858 782 B1**
(45) Veröffentlichungstag und Bekanntmachung des Hinweises auf die Patenterteilung: **23.05.2012**
(21) Anmeldenummer: 06705380.1
(22) Anmeldetag: 07.03.2006
(51) Int. Cl.: B65G 17/42, F16C 33/50, B65G 35/00, B65G 17/08, B65G 39/20

(54) **ROLLENKÖRPER UND VERFAHREN ZUM HERSTELLEN EINES ROLLENKÖRPERS**
ROLLING BODY AND METHOD FOR MANUFACTURING A ROLLING BODY
CORPS DE ROULEMENT ET PROCÉDÉ DE FABRICATION D'UN CORPS DE ROULEMENT

(30) Priorität: 11.03.2005 WO PCT/CH2005/000144; 20.05.2005 CH 878052005
(43) Veröffentlichungstag der Anmeldung: 28.11.2007
(60) Teilanmeldung: 10004233.2
(73) Patentinhaber: WRH Walter Reist Holding AG, 8272 Ermatingen (CH)
(72) Erfinder: REIST, Walter, CH-8340 Hinwil (CH); MÜLLER, Erwin, CH-8635 Dürnten (CH)
(74) Vertreter: Frei, Alexandra Sarah
(86) Internationale Anmeldenummer: PCT/CH2006/000140
(87) Internationale Veröffentlichungsnummer: WO 2006/094423

(56) Entgegenhaltungen:
- EP-A- 0 139 287
- EP-A- 0 890 755
- EP-A2- 1 083 347
- BE-A- 491 893
- DE-A1- 10 331 977
- DE-A1- 19 637 624
- DE-B- 1 273 415
- GB-A- 2 253 248
- JP-A- 10 110 728
- NL-C- 44 407
- US-A- 3 028 658
- US-A- 3 595 377
- US-A- 4 598 957
- US-A- 5 549 391
- US-B1- 6 203 200

## Beschreibung

Die Erfindung liegt im Gebiet der Fördertechnik und bezieht sich auf einen Rollenkörper sowie ein Verfahren zum Herstellen eines Rollenkörpers gemäss dem Oberbegriff der entsprechenden unabhängigen Patentansprüche. Eim solcher Rollenkörper und ein solches Verfahren sind aus der US 6,203,200 bekannt.

Insbesondere betrifft die Erfindung Fördervorrichtungen zum Transport von einzelnen Objekten oder Schüttgut in einer fliessenden Förderbewegung. Dabei stellt sich unter anderem die Aufgabe, leicht laufende Fördervorrichtungen mit einfachen und kostengünstigen Mitteln zu realisieren.

US 6,203,200 beschreibt einen linear bewegbaren Schlitten in einer Werkzeugmaschine oder einem Präzisionsinstrument. Zur Lagerung des Schlittens verlaufen Rollenbänder in Kanälen zwischen dem Schlitten und einer Basis der Maschine. Die Rollenbänder bestehen aus einer Vielzahl von Lagerkugeln oder - Rollen, welche in einem Kunststoffband gehalten und voneinander beabstandet sind. Die Rollenbänder werden durch Umspritzen der Rollen mit einem Kunstharzmaterial und anschliessendem Aushärten gefertigt. Dadurch wird eine präzise Lagerung der Rollen im Rollenband erreicht. Gleichartige Rollenbänder sind auch in EP 0 890 755 A2 offenbart.

JP 10-110728 zeigt ebenfalls Rollenbänder, welche in einer Ausführungsform (gemäss der Fig. 4) ein flaches Verstärkungselement (16) beinhalten. Dieses Verstärkungselement ist mit weiteren Elementen verbunden, welche dem Rollenband zumindest stellenweise eine gewisse Dicke verleihen und die Rollen am Herausfallen hindern.

EP 1 083 347 zeigt einen Herstellungsprozess und eine dadurch gebildete Kette von Rollen: die Rollen werden in ein flaches Band eingesetzt und dann zusätzlich mit Rückhalteelementen (Spacer portions) umspritzt.

US 5,549,391 zeigt zylindrische Rollen, die um 45° angewinkelt mit einer Schnappverbindung in einem flachem Band eingesetzt sind. Die Drehachsen der Rollen sind abwechslungsweise um +/- 45° zur Ebene des Bandes geneigt. Die Rollen sind gehalten
- an Kontaktpunkten des Bandes, an welchen die Zylinderfläche der Rollen gleitet, und
- an Kontaktschultern des Bandes, an welchen die Stirnseite der Rollen gleitet.
Es liegen keine Achselemente vor, oder korrespondierende Aussparungen an den Rollen.

US 4,598,957 zeigt einstückige Verbindungskörper in welche Rollen über Lagerkörper eingesetzt sind. Die Rollen sind auch hier abwechselnd um +/-45° geneigt und in den Lagerkörpern durch Kontaktpunkte und Kontaktschultern gelagert. Es wird ausdrücklich von der Verwendung einstückiger Verbindungskörper abgeraten.

GB 2 253 248 zeigt die Herstellung eines Rollenkörpers mit mehreren Rollen: Ein Band mit angeformten Rollen wird einstückig durch Spritzgiessen gebildet. Nach dem Belasten des Bandes in einem Lager brechen die Rollen an Sollbruchstellen los und laufen lose im Band. Es liegt dann also keine Lagerung der Rollen mehr vor. Es ist somit ein Rollenband in zwei möglichen Zuständen offenbart: vor und nach dem Ausbrechen der Rollen. In keinem der beiden Zustände sind jedoch die Rollen im Verbindungskörper eingesetzt und gelagert.

US 3,028,658 zeigt als Verbindungskörper einen runden Kugellagerkäfig aus Metall. Lagerstellen werden mit einem Spezialwerkzeug durch Umformen des Verbindungskörpers in Ausnehmungen der Rollen hinein geformt. Dabei wirken die Aussparungen der Rollen als Matrize für den Umformprozess.

Die eingangs genannte Aufgabe wird gelöst durch einen Rollenkörper sowie ein Verfahren zum Herstellen eines Rollenkörpers gemäss den entsprechenden unabhängigen Patentansprüchen.

Ein Rollenkörper für eine Fördervorrichtung gemäß der Erfindung weist eine Mehrzahl von linear miteinander verbundenen Rollen auf, wobei die Rollen durch einen flexiblen und insbesondere auch elastischen Verbindungskörper miteinander verbunden und voneinander beabstandet sind. Der Verbindungskörper bildet also einen beweglichen Lagerkäfig, auch Käfigband genannt. Dabei ist das Käfigband in einer bevorzugten Ausführungsform der Erfindung in mindestens zwei Richtungen biegbar. Dazu weist der Verbindungskörper vorzugsweise Haltebereiche auf, in welche die Rollen eingesetzt sind, und Gelenkbereiche, welche die Haltebereiche flexibel miteinander verbinden. Der Rollenkörper kann sich also nicht nur in einer ebenen Umlaufbahn bewegen, sondern auch entlang einer Umlaufbahn, die in einer gekrümmten Fläche verläuft. Mit anderen Worten: es ist der Rollenkörper in zwei Richtungen reversibel biegbar, wobei diese beiden Richtungen und eine Bewegungsrichtung des Rollenkörpers jeweils senkrecht zu einander sind.

Ein Rollenkörper mit einem solchen Käfigband oder Verbindungskörper lässt sich als standardisiertes Massenprodukt in beliebiger Länge herstellen und vielseitig in unterschiedlichen Fördervorrichtungen, Rollenelementen und Lagerungen aller Art einsetzen. Durch die nachfolgend beschriebene Verwendung von einstückigen, einfach geformten und einfach herzustellenden Komponenten und des Zulassens von Spiel in den Bewegungen können leichtlaufende Rollenkörper in sehr kostengünstiger Weise hergestellt werden.

Die Rollenkörper gemäss der Erfindung sind insbesondere in Fördervorrichtungen, wie sie in der Schweizerischen Patentanmeldung CH 456/04 18.03.2004 und der sich auf deren Priorität berufende internationalen Anmeldung WO 2005/087627 A1 vom 11.03.2005 beschrieben sind, einsetzbar, sowie in Rollenelementen, wie sie in der Schweizerischen Patentanmeldung CH 884/04 vom 21.05.2004 und der sich auf deren Priorität berufende internationalen Anmeldung WO 2005/113391 A2 vom 20.05.2005 beschrieben sind.

Ein Antrieb der Fördervorrichtung kann durch ein Band realisiert werden, welches gegen die Förderkörper gedrückt wird und/oder eine Folge von Förderkörpern entlang einer Krümmung der Förderbahn umschliesst. Ein Antrieb kann auch beispielsweise mit Antriebsnocken realisiert werden, die ein Stück weit entlang der Förderkörper geführt werden und an mehreren Förderkörpern angreifen. Ein solcher Antrieb kann durch ein angetriebenes Rollenelement realisiert werden, wie es in der Schweizerischen Patentanmeldung CH 885/04 vom 21.05.2004 und der sich auf deren Priorität berufende internationalen Anmeldung WO 2005/113392 A2 vom 20.05.2005 beschrieben sind. Dabei greifen Rollen oder vorstehende Nocken eines umlaufenden Rollenkörpers des angetriebenen Rollenelementes in die Fördervorrichtung und insbesondere deren Förderkörper ein.

In einer bevorzugten Ausführungsform der Erfindung ist der Verbindungskörper einstückig, z.B. aus einem Kunststoff geformt.

Erfindungsgemäß sind die Rollen einstückig und walzenförmig, und sind und an den Innenseiten der Haltebereiche jeweils einander gegenüberliegende Lagerstellen geformt. An den Rollen sind insbesondere mit der Form der Lagerstellen korrespondierende, hervorstehende Achselemente geformt. Die Rollen sind mittels der Achselemente in die Lagerstellen eingesetzt. Der Begriff walzenförmig umfasst insbesondere die Form eines Kreiszylinders oder eines tonnenförmigen, ausgebauchten Zylinders oder eines eingebuchteten Zylinders. Die Rollen sind vorzugsweise einstückig und aus Metall oder Kunststoff geformt.

Umgekehrt können auch die Innenseiten der Haltebereiche jeweils einander gegenüberliegende, hervorstehende Lagervorsprünge aufweisen, und sind an den Rollen, vorzugsweise mit der Form der Lagerstellen korrespondierende, Einbuchtungen geformt. Damit sind die Rollen mittels der Einbuchtungen in die Lagervorsprünge einsetzbar.

Um das Einsetzen zu erleichtern sind die hervorstehenden Achselemente respektive die hervorstehenden Lagervorsprünge vorzugsweise sich verjüngend und insbesondere spitz zulaufend geformt.

Die Rollen bilden innerhalb des Rollenkörpers vorzugsweise eine einzelne lineare Folge oder Reihe von Rollen. Es können aber auch zwei oder mehr Reihen von Rollen im selben Rollenkörper nebeneinander angeordnet sein.

Weitere bevorzugte Ausführungsformen gehen aus den abhängigen Patentansprüchen hervor.

Im folgenden wird der Erfindungsgegenstand anhand von bevorzugten Ausführungsbeispielen, welche in den beiliegenden Zeichnungen dargestellt sind, näher erläutert. Die Figuren 1-9c und 17-18b entsprechen nicht dem Gegenstand der Erfindung. Es zeigen jeweils schematisch:
- Figur 1: eine Fördervorrichtung in einer Aufsicht;
- Figur 2: dieselbe Fördervorrichtung im Querschnitt;
- Figuren 3 und 4: eine weitere Fördervorrichtung in einer Aufsicht und im Querschnitt;
- Figur 5: eine Bewegung von Förderkörpern in einer gekrümmten Ausführungsform der weiteren Fördervorrichtung;
- Figur 6: entsprechende Förderkörper;
- Figur 7: eine Fördervorrichtung mit umlaufenden Förderkörpern;
- Figuren 8 und 9: Rollenkörper mit kugelförmigen Rollen;
- Figuren 10 bis 18: Rollenkörper mit walzenförmigen Rollen; und
- Figuren 19 bis 20: weitere Anwendungen von Rollenkörpern.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

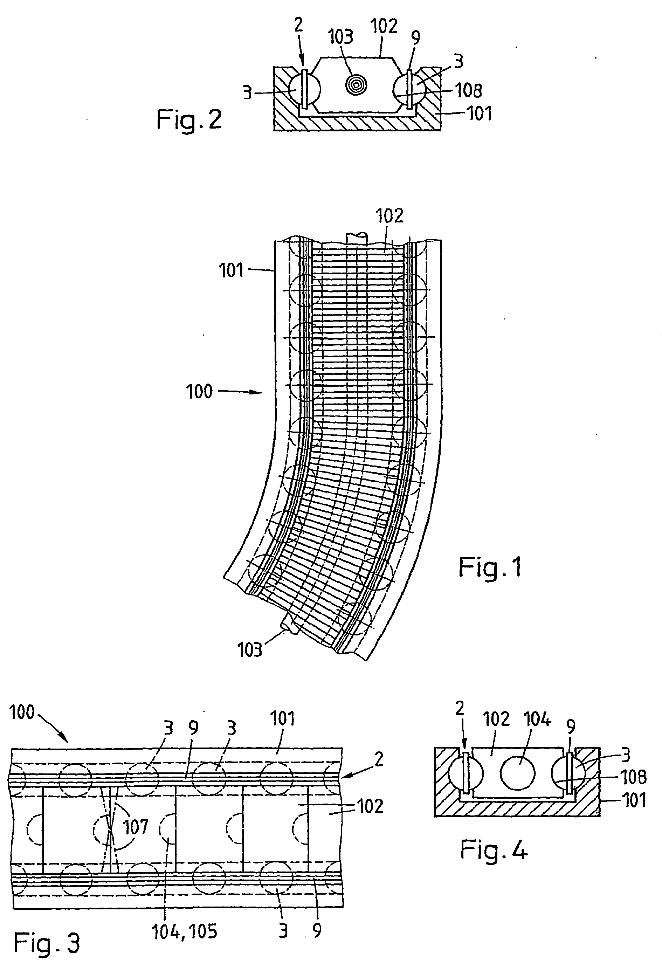

**Figur 1** zeigt eine Fördervorrichtung 100 in einer Aufsicht, und **Figur 2** im Querschnitt. In einer Führungsschiene 101 sind in Längsrichtung hintereinander mehrere Förderkörper 102 durch beidseitig verlaufende Rollenkörper 2 geführt und abgestützt. Die Förderkörper 102 weisen beiderseits je eine Führungsnut 108 auf, die mit der Form der Rollen 3 korrespondiert. Die Rollenkörper 2 weisen Verbindungskörper 9 und darin gelagerte Rollen 3 auf. Die Förderkörper 102 sind einzelne Blöcke oder aber Lamellen, wobei in der Längsrichtung jeweils mehrere Lamellen pro Rolle 3 vorliegen. Die Blöcke oder Lamellen sind durch eine Seele 103, d.h. ein die Förderkörper 102 durchlaufendes flexibles Seil, Kabel oder Monofilament miteinander verbunden. Dabei ist die Seele 103 lose durch die Förderkörper 102 geführt, oder ist die Seele 103 mit den Förderkörpern 102 verbunden, was eine Torsion der Förderkörper 102 um die Seele 103 einschränkt. In beiden Fällen stützt die Seele 103 die Förderkörper 102 in den Bereichen in welchen die Förderkörper 102 nicht durch den Rollenkörper 2 selber gestützt sind.

**Figuren 3** und **4** zeigen eine weitere Fördervorrichtung 100 in einer Aufsicht und im Querschnitt. Hier sind die Förderkörper 102 als Blöcke geformt. Es liegt in Längsrichtung rund ein Förderkörper 102 pro Rolle 3 vor. Damit die Förderkörper 102 nicht aus der Führungsschiene 101 herausfallen, sind die Förderkörper 102 mit Verbindungselementen 104, 105 zur gegenseitigen Abstützung versehen. Hier sind dies jeweils korrespondierend geformte Gelenkausbuchtungen 104 und Gelenkeinbuchtungen 105, wie anhand der folgenden Figuren erläutert wird.

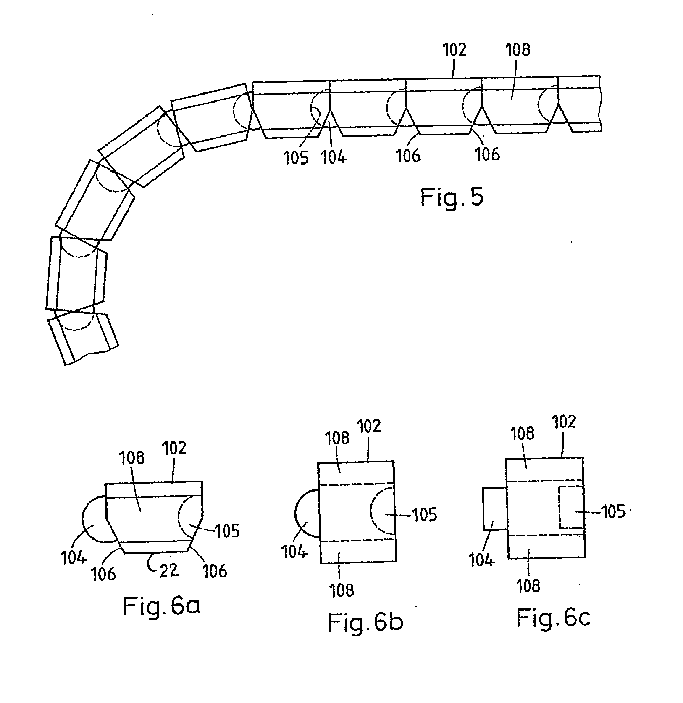

**Figur 5** zeigt eine Bewegung von Förderkörpern 102 in einer gekrümmten Ausführungsform der weiteren Fördervorrichtung 100. Figur 6 zeigt entsprechende unterschiedliche Varianten einzelner Förderkörper 102 in einer gemeinsamen Seitenansicht 6a und in unterschiedlichen Aufsichten 6b, 6c. Die Gelenkausbuchtungen 104 und die Gelenkeinbuchtungen 105 sind kugelförmig **(****Figur 6b****)** oder zylinderförmig (Figur 6c), wobei jeweils eine Gelenkausbuchtung 104 eines Förderkörpers 102 in eine Gelenkeinbuchtung 105 eines anschliessenden Förderkörpers 102 passt. Die Förderkörper 102 weisen beiderseits je eine Führungsnut 108 auf, die mit der Form der Rollen 3 korrespondiert.

Die beiden Rollenkörper 2 der Fördervorrichtung 100 respektive ihre Bewegungsrichtung verlaufen somit in einer Ebene im wesentlichen parallel zu beiden Seiten der Förderkörper 102 und deren Bewegungsrichtung, wobei die Mittel 104, 105 zur gegenseitigen Abstützung eine Relativbewegung der Förderkörper 102 senkrecht zu dieser Ebene verhindern. Bei einer Krümmung der Führungsschiene 101 ist die Bewegungsrichtung als Tangentiale zu verstehen.

Um, wie in **Figur 5****,** eine Bewegung der Förderkörper 102 aus dieser Ebene heraus zu ermöglichen, weisen die Förderkörper 102 erste Abschrägungen 106 auf zwischen den Stirnseiten und einer Innenseite 22 auf. Diese Abschrägungen beginnen, in einer seitlichen Projektion wie in **Figur 5** oder **Figur 6a** zu sehen, am Ort der Zylinderachse respektive des Kugelmittelpunktes. Die ersten Abschrägungen 106 führen von da aus zur Innenseite 22 des Förderkörpers 102, so dass sich eine Folge von Förderkörpern 102 in Richtung ihrer Innenseiten 22 krümmen kann, wobei sich jeweils zwei Förderkörper 102 gegeneinander um das dazwischen liegende Gelenk 104, 105 drehen. Werden die Förderkörper 102 gegeneinander gedrückt, so liegen ihre Stirnflächen im oberen Teil satt aneinander an und verhindern ein Einknicken der Förderkörper 102 nach unten.

In einer weiteren Ausführungsform, welche das Verständnis der Erfindung erleichtet liegen zweite Abschrägungen 107 an der Stirnseite vor, welche eine Krümmung einer Folge von Förderkörpern 102 in derselben Ebene erlauben, entlang welcher Ebene sich die Förderkörper 102 und die seitlich der Förderkörper 102 verlaufenden Rollenkörper 2 bewegen. Dazu führen die zweiten Abschrägungen 107, in einer Projektion von oben, also in einer Ansicht wie bei den **Figuren 3****,** **6b** oder **6c****,** von einer Linie durch den Kugelmittelpunkt zu den Seiten links und rechts des Förderkörpers 102. Durch den Kontakt entlang dieser Linie ist die gegenseitige Abstützung der Förderkörper 102 gegen ein Einknicken nach unten weiterhin gewährleistet. Zweite Abschrägungen 107 sind beispielhaft in der **Figur 3** strichliert eingezeichnet.

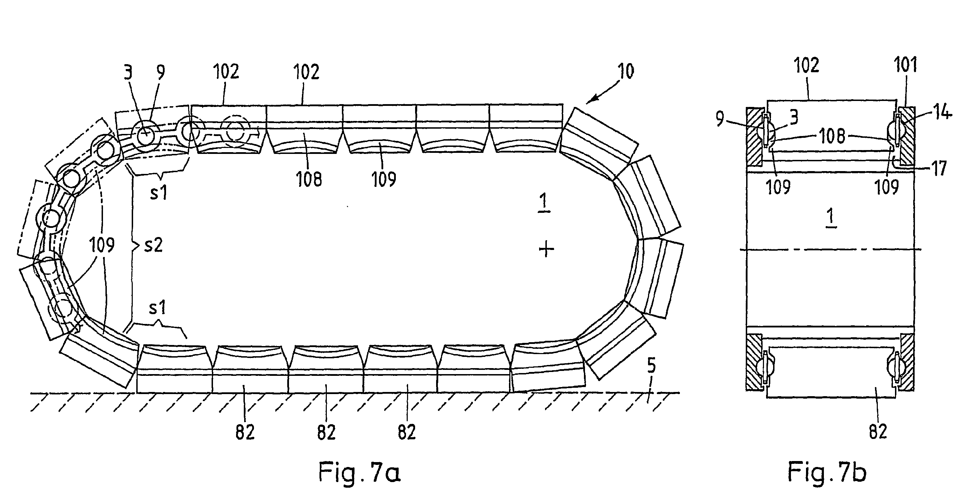

**Figur 7** zeigt eine Fördervorrichtung 100 mit umlaufenden Förderkörpern 102 in einer Seitenansicht 7a und im Querschnitt 7b. Die Förderkörper 102 verlaufen in einer Förderbahn 17 und sind seitlich durch einen Rollenkörper 2 mit kugelförmigen Rollen 3 in Lagernuten 14 der Förderbahn 17 gelagert. Alternativ zum Rollenkörper 2 mit Kugeln kann auch einer der weiter unten vorgestellten Rollenkörper 2 mit Walzen verwendet werden. Bei einer fest montierten Förderbahn 17 oder Führungsschiene ist die Anzahl der Förderkörper 102 in der Regel grösser als eingezeichnet und bildet so ein Förderband oder eine Förderkette. Dazu können die Förderkörper 102 z.B. mit Greifern versehen sein. Die Förderkörper 102 können durch ihre Bewegung Stück- oder Schüttgut transportieren.

In einer anderen Einsatzweise kann die Anordnung gemäss der **Figur 7** als Rollenelement 10 ausgebildet sein, welches über die Förderkörper 102, die dabei als Auflagekörper 82 funktionieren an einem strichliert eingezeichneten Gegenkörper 5 abrollen kann. Ein Zentralkörper 1 des Rollenelements 10 sowie damit verbundene Objekte können so als Ganzes bezüglich des Gegenkörpers 5 gefördert werden. Die Auflagekörper 82 und die Rollenkörper 2 ersetzten so eine Lagerung des Zentralkörpers 1 durch Räder.

Beim Übergang zwischen dem geraden Abschnitt und dem gekrümmten Abschnitt s2 mit einem bestimmten ersten Kurvenradius weist die Führungsschiene 101 vorzugsweise einen Zwischenabschnitt s1 mit einem grösseren Kurvenradius als dem ersten Kurvenradius auf. Dadurch wird verhindert, dass, wenn beim Einfahren eines Förderkörpers 102 in den gekrümmten Bereich der Förderkörper 102 abkippt, der nachfolgende Förderkörper 102 vom Zentralkörper 1 weg abgehoben wird.

In einer weiteren Ausführungsform ist ein Führungsvorsprung 109, der die Führungsnut 108 nach innen hin begrenzt, gekrümmt. Dadurch bilden in dem gekrümmten Bereich der Umlaufbahn 17 die aneinanderstossenden Führungsvorsprünge 109 zumindest annähernd ein Kreissegment, entlang welchem die Rollen 3 in einer regelmässigen Bewegung abrollen können.

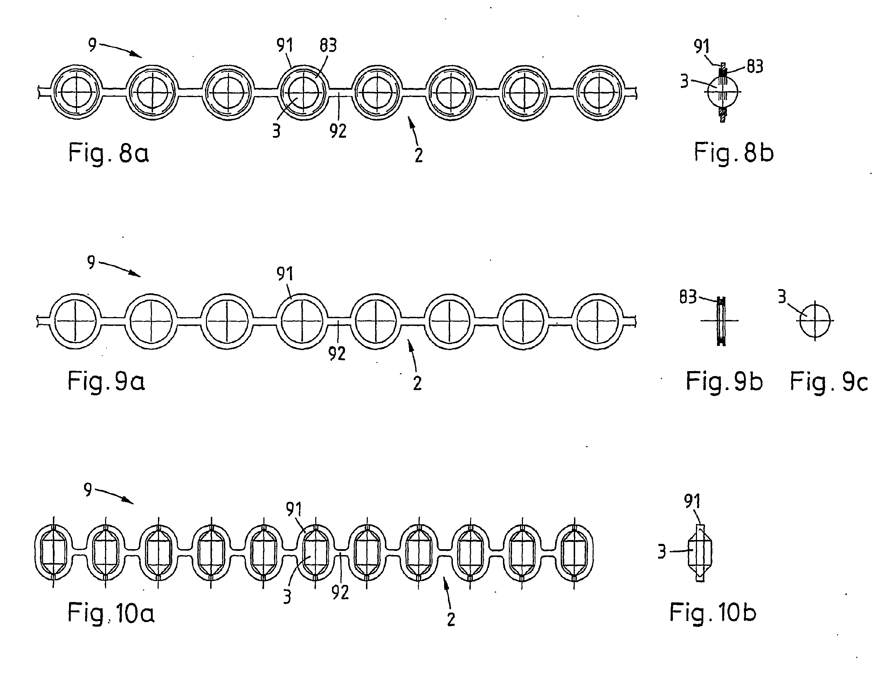

**Figuren 8** und **9** zeigen Rollenkörper 2 mit kugelförmigen Rollen. **Figuren 8a** und **8b** zeigen den kompletten Rollenkörper 2 in einer Aufsicht **8a** und einem Querschnitt **8b.** **Figuren 9a, 9b** und **9c** zeigen einen Verbindungskörper 9 oder Käfigband, einen Rollenring 83 im Querschnitt und eine kugelförmige Rolle 3. Der Verbindungskörper 9 weist einerseits ringartige Haltebereiche 91 auf, in welche die Rollen 3 mittels der Rollenringe 83 eingesetzt sind, und andererseits Gelenkbereiche 92, welche die Haltebereiche 91 flexibel miteinander verbinden. Die Rollenringe 83 sind beispielsweise einstückig aus Kunststoff gefertigt, und weisen eine Innenfläche entsprechend einer Kugelfläche auf, so dass die Kugeln in die Ringe 83 eingeknipst werden können. Die Rollenringe 83 weisen am äusseren Rand eine umlaufende Nut auf, mittels derer sie in kreisförmige Öffnungen von Haltebereichen 91 des Verbindungskörpers 9 eingesetzt sind. Der Verbindungskörper 9 ist vorzugsweise aus einem elastischen Flachmaterial aus Kunststoff oder Gummi oder einem Mischgewebe gefertigt, beispielsweise durch Stanzen oder Wasserstrahlschneiden.

In einer anderen bevorzugten Ausführungsform der Erfindung weist der Verbindungskörper 9 keine schmalen Gelenkbereiche 92 auf, sondern ist ein Band mit gleichbleibender Breite, in welches die Rollen 3 eingesetzt sind.

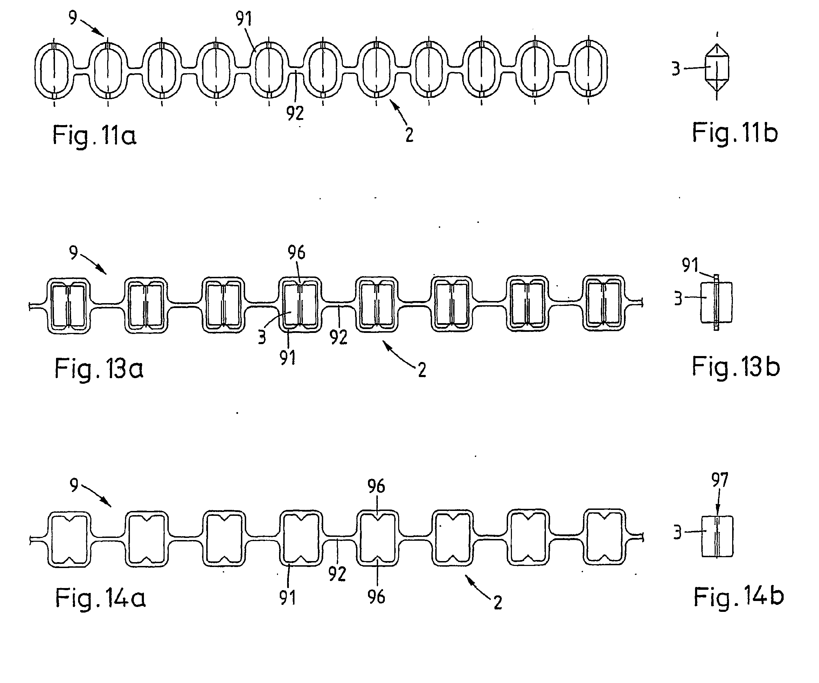

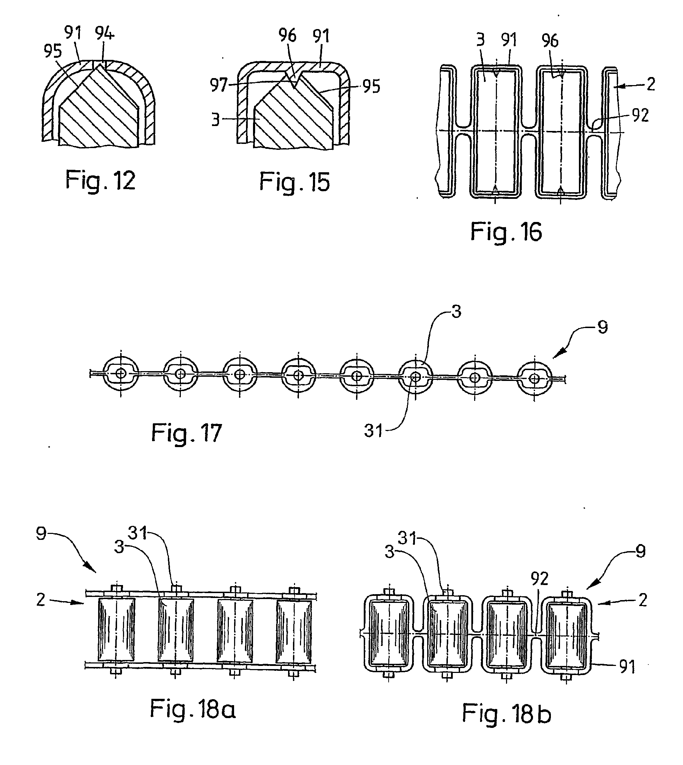

**Figuren 10** bis **18** zeigen Rollenkörper mit walzenförmigen Rollen. **Figuren 10a** und **10b** zeigen einen Rollenkörper 2 in einer Aufsicht **10a** und einem Querschnitt **10b.** **Figuren 11a,** und **11b** zeigen einen Verbindungskörper 9 oder Käfigband und eine walzenförmige Rolle 3. Der Verbindungskörper 9 weist einerseits ringartige Haltebereiche 91 auf, in welche die Rollen 3 eingesetzt sind, und andererseits Gelenkbereiche 92, welche die Haltebereiche 91 flexibel miteinander verbinden. Der Verbindungskörper 9 ist vorzugsweise einstückig und besteht aus einem flexiblen oder elastischen aber nicht weichelastischen Material, beispielsweise einem Kunststoff wie Nylon. Er ist durch Spritzguss oder aus einem Flachmaterial gefertigt, beispielsweise durch Stanzen oder Wasserstrahlschneiden. Die Rollen 3 sind ebenfalls aus Kunststoff oder aber aus Metall, insbesondere Stahl gefertigt. In dieser Ausführungsform der Erfindung sind die Rollen 3 in Achsrichtung konisch und spitz zulaufend, wodurch konische Achselemente 95 gebildet werden, wie in der Detailansicht gemäss der **Figur 12** zu sehen. An den Innenseiten der Haltebereiche 91 sind jeweils einander gegenüberliegend entsprechende Vertiefungen wie z.B. Innenkonusse als Lagerstellen 94 geformt. Diese Innenkonusse bewirken eine Lagerung für die Rollen 3. Anstelle von konischen Elementen kann natürlich auch eine andere Form für die Lagerung verwendet werden, beispielsweise eine zylindrische. Die Verbindung durch die Gelenkbereiche 92 ist, in Laufrichtung der Rollen 3 betrachtet, zumindest annähernd bei der Mitte der Rollen 3 angeordnet. Ein solches Käfigband 9 lässt sich innerhalb einer Ebene senkrecht zu den Rollenachsen biegen, und kann so mit einem Zentralkörper 1 gemäss beispielsweise der **Figur 7** verwendet werden.

Dank der flexiblen und einzigen Verbindung durch die Gelenkbereiche 92 ist der Verbindungskörper 9 aber auch aus dieser Ebene heraus biegbar, so dass der Zentralkörper 1 nicht eine ebene Umlaufbahn aufweisen muss. Ferner ist das Käfigband 9 durch die Gelenkbereiche 92 tordierbar und somit kann auch der Rollenkörper 2 einer Bahn, die eine Torsion des Rollenkörpers 2 bedingt, folgen. Ein solcher Rollenkörper 2 lässt sich also vielseitig einsetzen und kann dazu auf einfache Weise in grossen Stückzahlen hergestellt werden.

**Figuren 13** und **14** zeigen einen weiteren Rollenkörper 2 in einer Aufsicht 13a und einem Querschnitt **13b.** **Figuren 14a,** und **14b** zeigen einen entsprechenden Verbindungskörper 9 oder Käfigband und eine walzenförmige Rolle 3. Diese sind in ähnlicher Weise herstellbar wie jene der Figuren 10 und 11. Für die Herstellung der Rolle 3 ist eine weitere Vereinfachung möglich, da diese durch ihre einfache Form entweder als einzelnes Spritzgussteil oder durch Abschneiden von einem dickwandigen Rohr hergestellt werden kann. Die Rollen 3 weisen in dieser Ausführungsform der Erfindung also zwei Einbuchtungen 97 zur Lagerung auf, wobei diese Einbuchtungen 97 auch durch ein durchgehendes Loch entlang der Rollenachse gebildet sein können. Der Haltebereich 91 des Verbindungskörpers 9 weist gegenüberliegende Lagervorsprünge 96 auf, die beim Einsetzen der Rollen 3 in die Einbuchtungen 97 einschnappen. Um dies zu vereinfachen sind die Lagervorsprünge 96, wie auch die Achselemente 95 der vorherigen Ausführungsform, vorzugsweise sich verjüngend und insbesondere spitz zulaufend ausgestaltet.

**Figur 15** zeigt eine weitere Variante mit einem Lagervorsprung 96 am Haltebereich 91 in einer Detailansicht. **Figur 16** zeigt eine Variante eines Rollenkörpers 2 mit anderen Proportionen. **Figur 17** zeigt eine Variante eines Rollenkörpers 2, bei welcher die Rollen 3 hervorstehende Lagerachsen 31 aufweisen, die in Lageröffnungen des Verbindungskörpers 9 gelagert sind. In einer Variante mit einer Aufsicht gemäss der **Figur 18a** weist der Verbindungskörper 9 zwei separate Hälften oder Lagerbänder auf, welche jeweils die Lagerachsen 31 an beiden Seiten des Rollenkörpers 2 verbinden. Dadurch ist der Rollenkörper 2 als ganzes nur in eine Richtung biegbar. Damit der Rollenkörper 2 nicht auseinanderfällt und gleichwohl der Rollenkörper 2 zusammengesetzt werden kann, liegen die Lagerachsen 31 beispielsweise mit einem Presssitz in den Lagerbändern und sind die Rollen 3 um die Lagerachse 31 lose drehbar. In der Variante gemäss der **Figur 18b** ist wie bei den bisherigen Ausführungsformen eine Biegung in zwei Richtungen sowie eine Torsion respektive Verdrehung möglich. Auch hier können die Lagerachsen 31 mit einem Presssitz im Verbindungskörper 9 befestigt sein. Es können aber auch die Lagerachsen 31 fest an die Rollen 3 angeformt sein und lose in den Haltebereichen 91 des Verbindungskörpers 9 liegen.

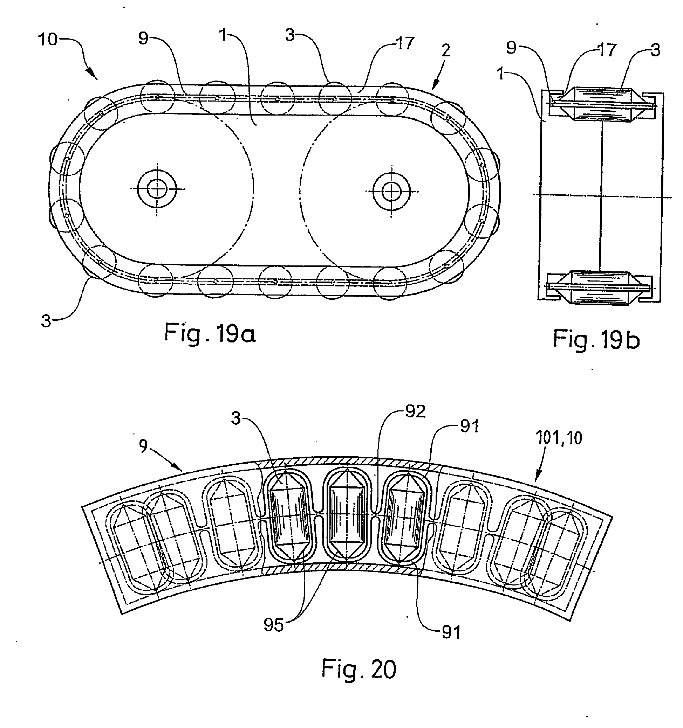

**Figur 19** zeigt ein Rollenelement 10 mit einem Rollenkörper 2 ähnlich jenem der **Figuren 10** und 11. Der Rollenkörper 2 läuft in einer Umlaufbahn 17 um einen Zentralkörper 1 um und erlaubt so ein Abrollen und damit eine Lagerung des Rollenelements 10 bezüglich eines weiteren Körpers.

**Figur 20** zeigt eine Bewegung eines Rollenkörpers 2 in einer gekrümmten Führungsschiene 101, beispielsweise in einem gekrümmten Rollenelement 10. Von der Bewegungsrichtung des Rollenkörpers 2 aus gesehen, ist hier also die Bewegung der Rollen 3 in zwei Richtungen senkrecht zueinander und zur Bewegungsrichtung gekrümmt.

### Bezugszeichenliste

- 1: Zentralkörper
- 10: Rollenelement
- 12: geradliniger Abschnitt
- 14: Lagernut
- 16: innere Kante der Lagernut
- 17: Förderbahn
- 2: Rollenkörper
- 22: Innenseite
- 3: Rolle
- 31: Lagerachse
- 5: Gegenkörper
- 82: Auflagekörper
- 83: Rollenring
- 9: Käfigband
- 91: Haltebereich
- 92: Gelenkbereich
- 94: Lagerstelle
- 95: Achselement
- 96: Lagervorsprung
- 97: Einbuchtung, Bohrung
- 100: Fördervorrichtung
- 101: Führungsschiene
- 102: Förderkörper
- 103: Seele
- 104: Gelenkausbuchtung
- 105: Gelenkeinbuchtung
- 106: erste Abschrägung
- 107: zweite Abschrägung
- 108: Führungsnut
- 109: Führungsvorsprung

## Patentansprüche

1. Rollenkörper (2) für eine Fördervorrichtung (100), aufweisend eine Mehrzahl von linear miteinander verbundenen Rollen (3), wobei die Rollen (3) durch einen Verbindungskörper (9) miteinander verbunden und voneinander beabstandet sind, und die Rollen (3) direkt in den Verbindungskörper (9) eingesetzt sind, wobei die Rotationsachse der Rollen (3) in der Ebene des Verbindungskörpers (9) liegt,
und wobei
entweder
• die Rollen (3) einstückig und walzenförmig sind und an den Innenseiten von Haltebereichen (91) des Verbindungskörpers (9) jeweils einander gegenüberliegende Lagerstellen (94) geformt sind, an den Rollen (3) hervorstehende Achselemente (95) geformt sind, und dass die Rollen (3) mittels der Achselemente (95) in die Lagerstellen (94) eingesetzt sind,
oder
• die Rollen (3) einstückig und walzenförmig sind und an den Innenseiten von Haltebereichen (91) des Verbindungskörpers (9) jeweils einander gegenüberliegende, hervorstehende Lagervorsprünge (96) geformt sind, an den Rollen (3) Einbuchtungen (97) geformt sind, wobei diese Einbuchtungen (97) durch ein durchgehendes Loch entlang der Rollenachse gebildet sein können, und dass die Rollen (3) mittels der Einbuchtungen (97) in die Lagervorsprünge (96) eingesetzt sind,
**dadurch gekennzeichnet, dass** der Verbindungskörper (9) aus einem flexiblen Flachmaterial gefertigt ist und dass die Rollen (3) durch Einschnappen in den Verbindungskörper (9) eingesetzt sind.

2. Rollenkörper (2) gemäss Anspruch 1, **dadurch gekennzeichnet, dass** der Verbindungskörper (9) einstückig gefertigt ist.

3. Rollenkörper (2) gemäss Anspruch 1 oder 2, **dadurch gekennzeichnet, dass** der Verbindungskörper (9) Gelenkbereiche (92), welche die Haltebereiche (91) flexibel miteinander verbinden, aufweist.

4. Rollenkörper (2) gemäss Anspruch 1, **dadurch gekennzeichnet, dass** der Rollenkörper (2) in mindestens zwei Richtungen biegbar ist, wobei diese beiden Richtungen und eine Bewegungsrichtung des Rollenkörpers (2) jeweils senkrecht zu einander sind.

5. Rollenkörper gemäss einem der Ansprüche 1 bis 4, **dadurch gekennzeichnet, dass** die Rollen (3) in Achsrichtung konische Achselemente (95) bilden.

6. Rollenkörper gemäss Anspruch 5, **dadurch gekennzeichnet, dass** die Rollen (3) in konische Lagerstellen (94) eingesetzt sind.

7. Rollenkörper gemäss Anspruch 5, **dadurch gekennzeichnet, dass** die Rollen (3) in zylindrische Lagerstellen (94) eingesetzt sind.

8. Rollenkörper gemäss einem der Anspruche 1 bis 7, **dadurch gekennzeichnet, dass** die hervorstehenden Achselemente (95) respektive die hervorstehenden Lagervorsprünge (96) jeweils sich verjüngend ausgestaltet sind.

9. Rollenkörper (2) gemäss einem der bisherigen Ansprüche, **dadurch gekennzeichnet, dass** zwei oder mehr Reihen von Rollen (3) im selben Rollenkörper (2) nebeneinander angeordnet sind.

10. **Verfahren** zur Herstellung eines Rollenkörpers, wobei der Rollenkörper (2) eine Mehrzahl von linear miteinander verbundenen Rollen (3) aufweist, welche durch einen Verbindungskörper (9) gelagert, miteinander verbunden und voneinander beabstandet sind, wobei die Rollen (3) direkt in den Verbindungskörper (9) eingesetzt werden, wobei die Rotationsachse der Rollen (3) in der Ebene des Verbindungskörpers (9) liegt,
und wobei
entweder
• die Rollen (3) einstückig und walzenförmig sind und an den Innenseiten von Haltebereichen (91) des Verbindungskörpers (9) jeweils einander gegenüberliegende Lagerstellen (94) geformt sind, an den Rollen (3) hervorstehende Achselemente (95) geformt sind, und dass die Rollen (3) mittels der Achselemente (95) in die Lagerstellen (94) eingesetzt werden,
oder
• die Rollen (3) einstückig und walzenförmig sind und an den Innenseiten von Haltebereichen (91) des Verbindungskörpers (9) jeweils einander gegenüberliegende, hervorstehende Lagervorsprünge (96) geformt sind, an den Rollen (3) Einbuchtungen (97) geformt sind, wobei diese Einbuchtungen (97) durch ein durchgehendes Loch entlang der Rollenachse gebildet sein können, und dass die Rollen (3) mittels der Einbuchtungen (97) in die Lagervorsprünge (96) eingesetzt werden,
**dadurch gekennzeichnet, dass** der Verbindungskörper (9) aus einem flexiblen Flachmaterial gefertigt wird und dass die Rollen (3) durch Einschnappen in den Verbindungskörper (9) eingesetzt werden.

11. Verfahren gemäss Anspruch 10, **dadurch gekennzeichnet, dass** der Verbindungskörper (9) einstückig aus dem Flachmaterial gefertigt wird.

12. Verfahren gemäss Anspruch 11, **dadurch gekennzeichnet, dass** der Verbindungskörper (9) durch Stanzen oder Wasserstrahlschneiden aus dem Flachmaterial gefertigt wird.

## Claims

1. A roller body (2) for a conveying device (100), comprising a plurality of rollers (3) which are linearly connected to one another, wherein the rollers (3) by way of a connecting body (9) are connected to one another and are distanced to one another, and the rollers (3) are inserted directly into the connecting body (9), wherein the rotation axis of the rollers (3) lies in the plane of the connecting body (9), and wherein
either
• the rollers (3) are of one piece and barrel-shaped, and in each case bearing locations (94) which lie opposite one another are formed on the inner sides of holding regions (91) of the connecting body (9), projecting pivot elements (95) are formed on the rollers (3), and the rollers (3) are inserted into the bearing locations (94) by way of the pivot elements (95),
or
• the rollers (3) are of one piece and barrel-shaped, and in each case projecting bearing protrusions (96) which lie opposite one another are formed on the inner sides of the holding regions (91) of the connecting body (9), recesses (97) are formed on the rollers (3), wherein these recesses (97) can be formed by a continuous hole along the roller axis, and the rollers (3) are inserted into the bearing protrusions (96) by way of the recesses (97),
**characterised in that** the connecting body (9) is manufactured of a flexible flat material and that the rollers (3) are inserted by way of snapping into the connecting body (9).

2. A roller body (2) according to claim 1, **characterised in that** the connecting body (9) is manufactured of one piece.

3. A roller body (2) according to claim 1 or 2, **characterised in that** the connecting body (9) comprises joint regions (92) which flexibly connect the holding regions (91) to one another.

4. A roller body (2) according to claim 1, **characterised in that** the roller body (2) can be bent in at least two directions, wherein these two directions and a movement direction of the roller body (2) are in each case perpendicular to one another.

5. A roller body according to one of the claims 1 to 4, **characterised in that** the rollers (3) form conical pivot elements (95) in the axis direction.

6. A roller body according to claim 5, **characterised in that** the rollers (3) are inserted into conical bearing locations (94).

7. A roller body according to claim 5, **characterised in that** the rollers (3) are inserted into cylindrical bearing locations (94).

8. A roller body according to one of the claims 1 to 7, **characterised in that** the projecting pivot elements (95) or the projecting bearing protrusions (96) are in each case designed in a tapering manner.

9. A roller body (2) according to one of the preceding claims, **characterised in that** two or more rows of rollers (3) are arranged next to one another in the same roller body (2).

10. A method for manufacturing a roller body, wherein the roller body (2) comprises a plurality of rollers (3) which are linearly connected to one another and are mounted, connected to one another and distanced to one another by way of a connecting body (9), wherein the rollers (3) are inserted directly into the connecting body (9), wherein the rotation axis of the rollers (3) lies in the plane of the connecting body (9) and wherein
either
• the rollers (3) are of one piece and barrel-shaped, and in each case bearing locations (94) which lie opposite one another are formed on the inner sides of holding regions (91) of the connecting body (9), projecting pivot elements (95) are formed on the rollers (3), and the rollers (3) are inserted into the bearing locations (94) by way of the pivot elements (95),
or
• the rollers (3) are of one piece and barrel-shaped, and in each case projecting bearing protrusions (96) which lie opposite one another are formed on the inner sides of the holding regions (91) of the connecting body (9), recesses (97) are formed on the rollers (3), wherein these recesses (97) can be formed by a continuous hole along the roller axis, and the rollers (3) are inserted into the bearing protrusions (96) by way of the recesses (97),
**characterised in that** the connecting body (9) is manufactured of a flexible flat material and that the rollers (3) are inserted by way of snapping into the connecting body (9).

11. A method according to claim 10, **characterised in that** the connecting body (9) is made of one piece of the flat material.

12. A method according to claim 11, **characterised in that** the connecting body (9) is manufactured from the flat material by means of punching or jet cutting.

## Revendications

1. Corps de roulement (2) pour dispositif de transport (100), le corps de roulement présentant plusieurs galets (3) reliés linéairement les uns aux autres, les galets (3) étant reliés les uns aux autres par un corps de liaison (9) et étant maintenus à distance les uns des autres et les galets (3) étant insérés directement dans le corps de liaison (9), l'axe de rotation des galets (3) étant situé dans le plan du corps de liaison (9),
- les galets (3) étant formés d'un seul tenant et présentant une forme cylindrique, des emplacements de montage (94) mutuellement opposés étant formés sur les côtés intérieurs de parties de maintien (91) du corps de liaison (9), des éléments d'axe (95) débordant des galets (3) et les galets (3) étant insérés dans les emplacements de montage (94) au moyen des éléments d'axe (95) ou
- les galets (3) sont formés d'un seul tenant et présentant la forme de cylindres, des saillies de montage (96) mutuellement opposées étant formées en débord sur les côtés intérieurs de parties de maintien (91) du corps de liaison (9), des creux (97) étant formés sur les galets (3), ces creux (97) pouvant être formés d'un trou qui traverse le galet le long de son axe et les galets (3) étant insérés dans les saillies de montage (96) au moyen des creux (97),
**caractérisé en ce que**
le corps de liaison (9) est réalisé en un matériau plat flexible et **en ce que** les galets (3) sont insérés dans le corps de liaison (9) en y étant encliquetés.

2. Corps de roulement (2) selon la revendication 1, **caractérisé en ce que** le corps de liaison (9) est réalisé d'une seule pièce.

3. Corps de roulement (2) selon les revendications 1 ou 2, **caractérisé en ce que** le corps de liaison (9) présente des emplacements articulés (92) qui relient les unes aux autres de manière souple les parties de maintien (91).

4. Corps de roulement (2) selon la revendication 1, **caractérisé en ce que** le corps de roulement (2) est déformable dans au moins deux directions, ces deux directions et la direction de déplacement du corps de roulement (2) étant mutuellement perpendiculaires.

5. Corps de roulement (2) selon l'une des revendications 1 à 4, **caractérisé en ce que** les galets (3) forment dans la direction axiale des éléments coniques d'axe (95).

6. Corps de roulement (2) selon la revendication 5, **caractérisé en ce que** les galets (3) sont insérés dans des emplacements de montage (94) coniques.

7. Corps de roulement (2) selon la revendication 5, **caractérisé en ce que** les galets (3) sont insérés dans des emplacements de montage (94) cylindriques.

8. Corps de roulement (2) selon l'une des revendications 1 à 7, **caractérisé en ce que** les éléments d'axe (95) en débord ou les saillies de montage (96) en débord sont effilés.

9. Corps de roulement (2) selon l'une des revendications précédentes, **caractérisé en ce que** deux ou plusieurs séries de galets (3) sont disposées les unes à côté des autres dans le même corps de roulement (2).

10. Procédé de fabrication d'un corps de roulement, le corps de roulement (2) présentant plusieurs galets (3) reliés les uns aux autres linéairement et étant montés, reliés les uns aux autres et maintenus à distance les uns des autres par un corps de liaison (9), les galets (3) étant insérés directement dans le corps de liaison (9), l'axe de rotation des galets (3) étant situé dans le plan du corps de liaison (9),
- les galets (3) étant formés d'un seul tenant et présentant une forme cylindrique, des emplacements de montage (94) mutuellement opposés étant formés sur les côtés intérieurs de parties de maintien (91) du corps de liaison (9), des éléments d'axe (95) débordant des galets (3) et les galets (3) étant insérés dans les emplacements de montage (94) au moyen des éléments d'axe (95) ou
- les galets (3) sont formés d'un seul tenant et présentant la forme de cylindres, des saillies de montage (96) mutuellement opposées étant formées en débord sur les côtés intérieurs de parties de maintien (91) du corps de liaison (9), des creux (97) étant formés sur les galets (3), ces creux (97) pouvant être formés d'un trou qui traverse le galet le long de son axe et les galets (3) étant insérés dans les saillies de montage (96) au moyen des creux (97),
**caractérisé en ce que**
le corps de liaison (9) est réalisé en un matériau plat flexible et
**en ce que** les galets (3) sont insérés dans le corps de liaison (9) par encliquetage.

11. Procédé selon la revendication 10, **caractérisé en ce que** le corps de liaison (9) est réalisé d'une seule pièce en le matériau plat.

12. Procédé selon la revendication 11, **caractérisé en ce que** le corps de liaison (9) est réalisé par estampage ou découpe au jet d'eau du matériau plat.
